(19) Europäisches Patentamt
European Patent Office
Office européen des brevets

(11) Publication number: **0 398 466 A2**

(12) # EUROPEAN PATENT APPLICATION

(21) Application number: **90301424.9**

(51) Int. Cl.[5]: **A23L 1/236**

(22) Date of filing: **09.02.90**

(30) Priority: **19.05.89 US 354651**

(43) Date of publication of application:
**22.11.90 Bulletin 90/47**

(84) Designated Contracting States:
**BE CH DE DK ES FR GB GR IT LI NL SE**

(71) Applicant: **WARNER-LAMBERT COMPANY**
**201 Tabor Road**
**Morris Plains New Jersey 07950(US)**

(72) Inventor: **Faust, Steven Michael**
**4-51 Audubon Court**
**Stanhope, New Jersey 07874(US)**
Inventor: **Wong, Lucy Lee**
**31-21 78th Street**
**Jackson Heights, New York 11370(US)**
Inventor: **Cherukuri, Subraman Rao**
**10 Jean Drive**
**Towaco, New Jersey 07082(US)**

(74) Representative: **Jones, Michael Raymond et al**
**HASELTINE LAKE & CO. Hazlitt House 28**
**Southampton Buildings Chancery Lane**
**London WC2A 1AT(GB)**

(54) **Synergistic sweetening compositions containing dipeptide sweetening agents and methods for preparing same.**

(57) There is disclosed a synergistic sweetening composition which comprises L-alpha-aspartyl-D-alanine N-(2,2,4,4-tetramethyl-3-thietanyl)amide and N-L-alpha-aspartyl-L-phenylalanine 1-methyl ester. The synergistic sweetening composition may be used in a wide variety of ingestible products such as hard and soft confections, and chewing gum compositions. There are also disclosed processes for preparing the synergistic sweetening compositions and the ingestible products in which they may be used.

EP 0 398 466 A2

# SYNERGISTIC SWEETENING COMPOSITIONS CONTAINING DIPEPTIDE SWEETENING AGENTS AND METHODS FOR PREPARING THE SAME

This invention pertains to sweetness synergy achieved by combining certain specific intense dipeptide sweetening agents.

Intense sweetening agents (sweeteners) are natural or synthetic compounds which have a greater sweetening intensity and usually a lower caloric value than that of sugar (sucrose). Because intense sweeteners have greater sweetening properties than sugar, smaller amounts of the sweeteners provide sweetening intensity equivalent to larger amounts of sugar. Intense sweeteners are well known in the art and are widely used as substitutes for sugar in many low calorie and/or noncariogenic compositions.

Intense sweeteners have a wide range of chemically distinct structures and hence possess varying properties. These intense sweetener compounds include water-soluble artificial sweeteners such as saccharin salts, cyclamate salts, and the potassium salt of 6-methyl-1,2,3-oxathiazin-4(3H)-one-2,2-dioxide (Acesulfame -K, a commercially available product from Hoechst Celanese Corporation, Somerville, New Jersey), proteins such as thaumatin (Talin, a commercially available product of Tate & Lyle Products, Reading, United Kingdom), chlorodexoysugar derivatives (such as Sucralose, a commercially available product of McNeil Specialty Products Company, Skillman New Jersey), and dipeptides such as N-L-alpha-aspartyl-L-phenylalanine 1-methyl ester (Aspartame, a commercially available product of the Nutrasweet Company, Deerfield, Illinois) and L-alpha-aspartyl-D-alanine N-(2,2,4,4-tetramethyl-3-thietanyl)amide (Alitame, a commercially available product of Pfizer, New York, New York) and dihydrochalcones. Each of these sweetening agents has a distinct sweetening intensity compared to sucrose and this sweetening intensity is well documented. For example, the following compounds have these different sweetening intensities:

| Compound | Sweetness Intensity (compared to sucrose) |
|---|---|
| Soluble saccharin salts | 300X |
| Cyclamate salts | 30X |
| N-L-alpha-Aspartyl-L-phenylalanine 1-methyl ester (Aspartame) | 180X |
| Potassium salt of 6-methyl-1,2,3-oxathiazin-4(3H)-one-2,2-dioxide (Acesulfame-K) | 200X |
| 4,1′,6′-Trichloro-4,1′,6′-trideoxygalactosucrose (Sucralose) | 600X |
| L-alpha-Aspartyl-N-(2,2,4,4-tetramethyl-3-thietanyl)-D-alaninamide hydrate (Alitame) | 2000X |

Because each intense sweetening agent is chemically distinct, each sweetener presents a different challenge with respect to the actual use of such sweetener in ingestible compositions. For example, some intense sweeteners present stability problems, such as Aspartame, which exhibits instability in the presence of aldehydes, ketones, moisture and the like. Other intense sweeteners have an associated bitter taste or off-note such as Saccharin (a commercially available product of PMC Specialty Group Inc., Cinncinnati, Ohio), stevioside, Acesulfame-K , glycyrrhizin, dipotassium glycyrrhizin, glycyrrhizic acid ammonium salt, and thaumatin (Talin).

United States patents no. 4,411,925 and 4,375,430, assigned to Pfizer, Inc., discloses the preparation and purification of certain dipeptide sweetening agents which include Alitame.

United States patent no. 4,535,396, issued to Stephens, Jr. et al. and assigned to Pfizer Inc., teaches a method of masking the bitter taste and enhancing the sweet taste of Acesulfame-K by combining the bitter-tasting intense sweetener with the sweetener Alitame.

Certain intense sweeteners have been used to offset the associated bitter aftertaste or unpleasant off-note of other intense sweeteners. For example, United Kingdom patent application no. 2154850A, assigned to Tate & Lyle plc, discloses the use of a combination of at least two intense sweeteners to modify the associated unpleasant taste of one of the sweeteners (cyclamate). The combination of the two sweeteners is said to provide a preferred sweetness. Specifically, a composition is disclosed for sweetening a beverage such as a cola, tea or coffee which comprises combining a chlorosucrose sweetener with a cyclamate, which is either alone or is in combination with other sweeteners.

United States patent no. 4,495,170, issued to Beytes et al. and assigned to Tate and Lyle plc, discloses synergistic sweetening compositions which comprise a mixture of a chlorodeoxysugar and another sweetening agent which has an associated bitter taste. The chlorodeoxysugars are selected from the group consisting of chlorodeoxysucroses and chlorodeoxygalactosucroses. The bitter tasting sweetening agent is selected from the group consisting of Saccharin, stevioside and Acesulfame-K.

United States patent no. 4,158,068, issued to Von Rymon Lipinski et al. and assigned to Hoechst (West Germany), discloses a sweetener mixture to improve the saccharose-like quality of acetosulfame-K. Specifically, acetosulfame-K is combined with at least one intense sweetener selected from the group consisting of aspartyl peptide ester sweeteners, sulfamate sweeteners, sulfimide sweeteners and dihydrochalcone sweeteners.

Thus, a variety of combinations of intense sweetening agents are known which have specific sweetness intensities compared to sucrose. There is still a need, however, for sweetening compositions which have varying properties and enhanced sweetening intensities for use in ingestible compositions. Such enhanced or synergistic sweetening compositions would permit an ingestible composition to contain a reduced total amount of sweetening composition, and would thereby reduce costs, stability problems, taste problems, caloric content problems, cariogenic properties, and the like. The present invention provides such synergistic sweetening compositions and various sweetened ingestible compositions and chewing gum products which incorporate the synergistic sweetening compositions.

## SUMMARY OF THE INVENTION

The present invention pertains to a synergistic sweetening composition which comprises L-alpha-aspartyl-D-alanine N-(2,2,4,4-tetramethyl-3-thietanyl)amide and N-L-alpha-aspartyl-L-phenylalanine 1-methyl ester. The synergistic sweetening composition may be used in a wide variety of ingestible products such as chewing gum compositions, hard and soft confections, and the like. The present invention also pertains to methods for preparing the synergistic sweetening compositions and the ingestible products in which they may be used.

## BRIEF DESCRIPTION OF THE DRAWINGS

FIGURE 1 depicts in graphic format the sweetness intensity, at various chew-out times, found for the chewing gum compositions of examples 1-10 which have different ratios of Alitame:Aspartame. The straight line through each of the curves denotes the expected sweetness intensity for the various sweetener ratios. The curve of actual intensities shows the ranges of sweetener ratios wherein synergy was found.

FIGURE 2 depicts in bar graph format the sweetness intensity, at various chew-out times, found for the chewing gum compositions of examples 11-13 which contained Alitame:Aspartame in a ratio of 80:20, respectively, at different reduced sweetener concentrations. The sweetener concentration was reduced until the actual sweetness intensity equalled or fell below the expected sweetness intensity for the 80:20 sweetener ratio.

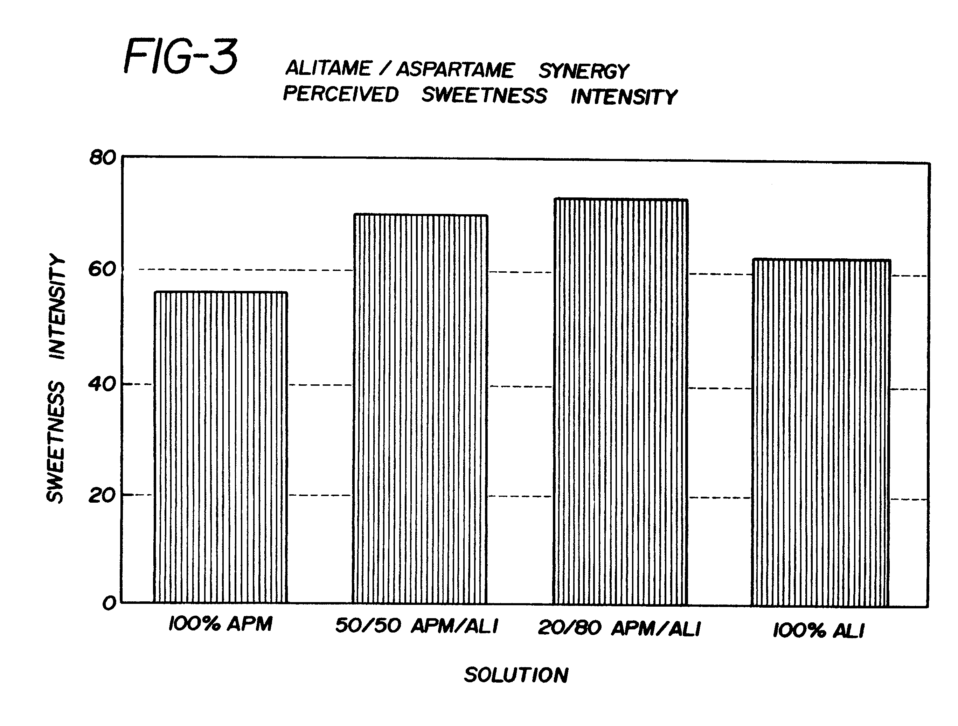

FIGURE 3 depicts in bar graph format the sweetness intensity found for the Alitame/Aspartame solutions of examples 14-15.

## DETAILED DESCRIPTION OF THE INVENTION

The present invention pertains to certain combinations of intense sweetening agents which provide an enhanced sweetness effect. In particular, the present invention relates to a combination of intense dipeptide sweetening agents comprising L-alpha-aspartyl-D-alanine N-(2,2,4,4-tetramethyl-3-thietanyl)amide and N-L-alpha-aspartyl-L-phenylalanine 1-methyl ester. The synergistic sweetening composition may be used in a wide variety of ingestible products such as chewing gum compositions, hard and soft confections, and the like. The present invention also pertains to methods for preparing the synergistic sweetening compositions and the ingestible products in which they may be used.

Applicants define the terms "ingestible" and "edible" to include all materials and compositions which are used by or which perform a function in the body. Materials and compositions which are adsorbed and

those which are not absorbed as well as those which are digestible and non-digestible are included.

The intense sweetening agents (sweeteners) of the present invention are dipeptide derivatives which comprise L-alpha-aspartyl-D-alanine N-(2,2,4,4-tetra-methyl-3-thietanyl)amide (Alitame) and N-L-alpha-aspartyl-L-phenylalanine 1-methyl ester (Aspartame). Alitame and Aspartame have a clean sugar-like sweetness with essentially no bitter after-taste.

L-alpha-aspartyl-D-alanine N-(2,2,4,4-tetramethyl-3-thietanyl)amide (Alitame) has the chemical structure shown below:

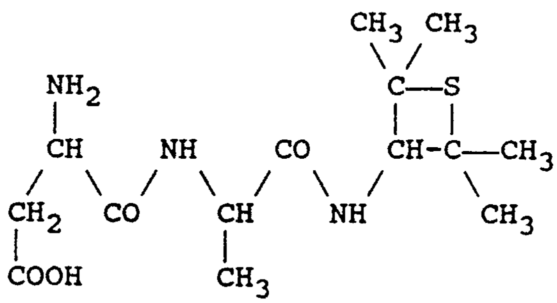

N-L-alpha-aspartyl-L-phenylalanine 1-methyl ester (Aspartame) has the chemical structure shown below:

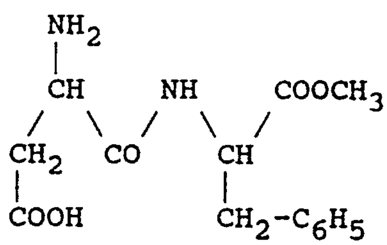

In a preferred embodiment, the synergistic sweetening compositions of the present invention comprise L-alpha-aspartyl-D-alanine N-(2,2,4,4-tetramethyl-3-thietanyl)amide (Alitame) and N-L-alpha-aspartyl-L-phenylalanine 1-methyl ester (Aspartame) present in a ratio by weight of from about 40:60 to about 90:10, respectively. In a more preferred embodiment, the synergistic compositions comprise L-alpha-aspartyl-D-alanine N-(2,2,4,4-tetramethyl-3-thietanyl)amide and N-L-alpha-aspartyl-L-phenylalanine 1-methyl ester present in a ratio by weight of from about 50:50 to about 90:10, and most preferably in a ratio by weight of from about 58:42 to about 85:15, respectively.

The intense sweetening agents of the present invention may be used in many distinct physical forms well known in the art to provide an initial burst of sweetness and/or a prolonged sensation of sweetness. Without being limited thereto, such physical forms include free forms, such as spray dried, powdered, and beaded forms, and encapsulated forms, and mixtures thereof.

The synergistic sweetening compositions of the present invention are prepared by admixing L-alpha-aspartyl-D-alanine N-(2,2,4,4-tetramethyl-3-thietanyl)amide and N-L-alpha-aspartyl-L-phenylalanine 1-methyl ester.

The combination of the intense sweeteners set out above, in the proportions disclosed, results in a synergistic sweetening composition having an enhanced sweetness effect both in solution and in chewing gum compositions. The sweetening intensity effect of the present composition is markedly greater than that expected by mere combination of the intense sweetening agents. Accordingly, applicants' synergistic sweetening compositions have the advantage of requiring lower amounts of sweetener to adequately sweeten an ingestible composition.

Once prepared, the inventive synergistic sweetening composition may be stored for future use or may be formulated with conventional additives, such as pharmaceutically acceptable carriers or confectionery ingredients to prepare a wide variety of ingestible compositions, such as foodstuffs, beverages, jellies, extracts, confectionery products, orally administered pharmaceutical compositions, and hygienic products such as toothpastes, dental lotions, mouth washes and chewing gums.

The amount of the inventive synergistic sweetening composition employed in an edible composition is a matter of preference, subject to such factors as the type of bulking agent or carrier employed in the composition and the strength of sweetness desired. Thus, the amount of sweetener composition may be varied in order to obtain the result desired in the final product and such variations are within the capabilities of those skilled in the art without the need for undue experimentation. In general, the amount of synergistic sweetening composition normally present in an edible composition will be from about 0.005% to about 0.5%, preferably from about 0.05% to about 0.3%, and more preferably from about 0.15% to about 0.25%, by weight of the edible composition.

The present invention extends to methods of making the ingestible compositions. In such a method, a composition is made by admixing the synergistic sweetening composition of the present invention with a pharmaceutically acceptable carrier or confectionery material and the other ingredients of the final desired ingestible composition. Other ingredients will usually be incorporated into the composition as dictated by the nature of the desired composition as well known by those having ordinary skill in the art. The ultimate ingestible compositions are readily prepared using methods generally known in the food technology and pharmaceutical arts.

In another embodiment, the present invention is directed at a method for sweetening an edible composition which comprises admixing an effective amount of a synergistic sweetening composition with the edible composition wherein the synergistic sweetening composition comprises L-alpha-aspartyl-D-alanine N-(2,2,4,4-tetramethyl-3-thietanyl)-amide and N-L-alpha-aspartyl-L-phenylalanine 1-methyl ester.

An important aspect of the present invention includes an improved chewing gum composition incorporating the inventive synergistic sweetening composition and a method for preparing the chewing gum composition, including both chewing gum and bubble gum formulations. In general, the improved chewing gum compositions will contain a gum base, the inventive synergistic sweetening composition, and various additives.

The gum base employed in the present invention will vary greatly depending upon various factors such as the type of base desired, the consistency of gum desired and the other components used in the composition to make the final chewing gum product. The gum base may be any water-insoluble gum base known in the art, and includes those gum bases utilized for chewing gums and bubble gums. Illustrative examples of suitable polymers in gum bases include both natural and synthetic elastomers and rubbers. For example, those polymers which are suitable as gum bases include, without limitation, substances of vegetable origin such as chicle, natural rubber, crown gum, nispero, rosidinha, jelutong, perillo, niger gutta, tunu, balata, guttapercha, lechi-capsi, sorva, gutta kay, mixtures thereof and the like. Synthetic elastomers such as butadiene-styrene copolymers, polyisobutylene, isobutylene-isoprene copolymers, polyethylene, mixtures thereof and the like are particularly useful.

Suitable gum bases also include a non-toxic vinyl polymer, such as polyvinyl acetate and its partial hydrolysate, polyvinyl alcohol, and mixtures thereof. When utilized, the molecular weight of the vinyl polymer may range from about 2,000 up to and including about 94,000.

The present invention includes chewing gum compositions containing traditional amounts of chewing gum base, i.e., from about 15% to about 35%, and chewing gum compositions containing high amounts of chewing gum base, i.e., from about 35% to about 85%, by weight. In the chewing gum compositions employing a high level of chewing gum base, the chewing gum base in general will comprise (a) about 0.5% to about 20% of an elastomer, (b) about 10% to about 25% of a polyvinyl acetate having a medium molecular weight of about 35,000 to about 55,000, (c) about 4.5% to about 10% acetylated monoglyceride, (d) about 6% to about 10% of a wax having a melting point below about 60° C., and (e) the remaining amounts of material selected from the group consisting of an elastomer solvent, emulsifiers, plasticizers, fillers and mixtures thereof. Chewing gum compositions employing high levels of chewing gum bases are more fully described in United States patent application serial no. 939,918, filed December 10, 1986, which disclosure is incorporated herein by reference.

The amount of gum base employed will vary greatly depending upon various factors such as the type of base used, the consistency of the gum desired and the other components used in the composition to make the final chewing gum product. In general, the gum base will be present in amounts from about 5% to about 85%, by weight of the final chewing gum composition, and preferably in amounts from about 15% to about 45%, and more preferably in amounts from about 15% to about 35%, and most preferably in amounts from about 20% to about 30%, by weight of the final chewing gum composition.

The gum base composition may contain conventional elastomer solvents to aid in softening the elastomer base component. Such elastomer solvents may comprise terpinene resins such as polymers of alpha-pinene or beta-pinene, methyl, glycerol or pentaerythritol esters of rosins or modified rosins and gums, such as hydrogenated, dimerized or polymerized rosins or mixtures thereof. Examples of elastomer

solvents suitable for use herein include the pentaerythritol ester of partially hydrogenated wood or gum rosin, the pentaerythritol ester of wood or gum rosin, the glycerol ester of wood rosin, the glycerol ester of partially dimerized wood or gum rosin, the glycerol ester of polymerized wood or gum rosin, the glycerol ester of tall oil rosin, the glycerol ester of wood or gum rosin and the partially hydrogenated wood or gum rosin and the partially hydrogenated methyl ester of wood or rosin, mixtures thereof, and the like. The elastomer solvent may be employed in amounts from about 5% to about 75%, and preferably from about 45% to about 70%, by weight of the chewing gum composition.

The gum base may also include plasticizers or softeners such as lanolin, palmitic acid, oleic acid, stearic acid, sodium stearate, potassium stearate, glyceryl triacetate, glyceryl lecithin, glyceryl monostearate, propylene glycol monostearate, acetylated monoglyceride, glycerine, polyglycerol esters, mineral oil, mixtures thereof, and the like. Waxes, for example, natural and synthetic waxes, hydrogenated vegetable oils, petroleum waxes such as polyurethane waxes, polyethylene waxes, paraffin waxes, microcrystalline waxes, fatty waxes, sorbitan monostearate, tallow, propylene glycol, mixtures thereof, and the like, may also be incorporated into the gum base. Such materials are incorporated into the gum base to provide a variety of desirable textures and consistency properties. Because of the low molecular weight of these ingredients, they are able to penetrate the fundamental structure of the gum base making it plastic and less viscous. These additional materials are generally employed in amounts up to about 18%, preferably in high chewing gum base compositions in amounts from about 5% to about 18%, and more preferably in amounts from about 10% to about 14%, by weight of the chewing gum composition.

In a preferred embodiment, the softening agent is anhydrous glycerin, such as the commercially available United States Pharmacopeia (USP) grade. Glycerin is a syrupy liquid with a sweet warm taste and has a sweetness of about 60% of that of cane sugar. Because glycerin is hygroscopic, it is important that the anhydrous glycerin be maintained under anhydrous conditions throughout the preparation of the chewing gum composition.

The gum base may also include effective amounts of mineral adjuvants such as calcium carbonate, magnesium carbonate, alumina, aluminum hydroxide, aluminum silicate, talc, tricalcium phosphate, dicalcium phosphate and the like, as well as mixtures thereof. These mineral adjuvants may serve as fillers and textural agents. These fillers or adjuvants may be used in the gum base in various amounts. Preferably the amount of filler, when used, will be present in an amount up to about 60%, by weight of the chewing gum composition.

A variety of traditional ingredients may be included in the gum base in effective amounts such as coloring agents, antioxidants, preservatives, and the like. For example, titanium dioxide and other dyes suitable for food, drug and cosmetic applications, known as F. D. & C. dyes, may be utilized. An antioxidant such as butylated hydroxytoluene (BHT), butylated hydroxyanisole (BHA), propyl gallate, and mixtures thereof, may also be included. Other conventional chewing gum additives known to one having ordinary skill in the chewing gum art may also be used in the chewing gum base.

The gum composition may include effective amounts of conventional additives selected from the group consisting of sweetening agents (sweeteners), plasticizers, softeners, emulsifiers, waxes, fillers, bulking agents, mineral adjuvants, flavoring agents (flavors, flavorings), coloring agents (colorants or colorings), antioxidants, acidulants, thickeners, mixtures thereof and the like. Some of these additives may serve more than one purpose. For example, in sugarless gum compositions, the sweetener, e.g., sorbitol or other sugar alcohol or mixtures thereof, may also function as a bulking agent. Similarly, in sugar containing gum compositions, the sugar sweetener can also function as a bulking agent.

The plasticizers, softening agents, mineral adjuvants, coloring agents, waxes and antioxidants discussed above, as being suitable for use in the gum base, may also be used in the gum composition. Examples of other conventional additives which may be used include emulsifiers, such as lecithin and glyceryl monostearate, thickeners, used alone or in combination with other softeners, such as methyl cellulose, alginates, carrageenan, xanthan gum, gelatin, carob, tragacanth, locust bean, and carboxy methyl cellulose, acidulants such as malic acid, adipic acid, citric acid, tartaric acid, fumaric acid, and mixtures thereof, and fillers, such as those discussed above under the category of mineral adjuvants. The fillers, when used, may be utilized in an amount up to about 60%, by weight of the gum composition.

The chewing gum composition may also contain a bulking agent. Suitable bulking agents (carriers, extenders) may be water-soluble and include sweetening agents selected from the group consisting of, but not limited to, monosaccharides, disaccharides, polysaccharides, sugar alcohols, and mixtures thereof; random bonded glucose polymers such as those polymers distributed under the tradename Polydextrose by Pfizer, Inc., Groton, Connecticut; isomalt (a racemic mixture of alpha-D-glucopyranosyl-1,6-mannitol and alpha-D-glucopyranosyl-1,6-sorbitol manufactured under the tradename PALATINIT by Suddeutsche Zucker), maltodextrins; hydrogenated starch hydrolysates; hydrogenated hexoses; hydrogenated disaccharides;

minerals, such as calcium carbonate, talc, titanium dioxide, dicalcium phosphate, celluloses and the and the like, and mixtures thereof. Bulking agents may be used in amounts up to about 85%, preferably in amounts from about 15% to about 70%, more preferably in amounts from about 50% to about 65%, and most preferably in amounts from about 55% to about 60%, by weight of the chewing gum composition.

Suitable sugar bulking agents include monosaccharides, disaccharides and polysaccharides such as xylose, ribulose, glucose (dextrose), mannose, galactose, fructose (levulose), sucrose (sugar), maltose, invert sugar, partially hydrolyzed starch and corn syrup solids, and mixtures thereof. Mixtures of sucrose and corn syrup solids are the preferred sugar bulking agents.

Suitable sugar alcohol bulking agents include sorbitol, xylitol, mannitol, galactitol, maltitol, and mixtures thereof.

Maltitol is a sweet, non-caloric, water-soluble sugar alcohol useful as a bulking agent in the preparation of non-caloric beverages and foodstuffs and is more fully described in United States patent no. 3,708,396, which disclosure is incorporated herein by reference. Maltitol is made by hydrogenation of maltose which is the most common reducing disaccharide and is found in starch and other natural products.

Suitable hydrogenated starch hydrolysates may include those disclosed in United States patent nos. Re. 25,959, 3,356,811, 4,279,931 and various hydrogenated glucose syrups and/or powders which contain sorbitol, hydrogenated disaccharides, hydrogenated higher polysaccharides, or mixtures thereof. Hydrogenated starch hydrolysates are primarily prepared by the controlled catalytic hydrogenation of corn syrups. The resulting hydrogenated starch hydrolysates are mixtures of monomeric, dimeric, and polymeric saccharides. The ratios of these different saccharides give different hydrogenated starch hydrolysates different properties. Mixtures of hydrogenated starch hydrolysates, such as Lycasin $^R$, a commercially available product manufactured by Roquette Freres of France, and Hystar $^R$, a commercially available product manufactured by Lonza, Inc., of Fairlawn, New Jersey, are also of interest.

The flavoring agents which may be used include those flavors known to the skilled artisan, such as natural and artificial flavors. These flavorings may be chosen from synthetic flavor oils and flavoring aromatics and/or oils, oleoresins and extracts derived from plants, leaves, flowers, fruits, and so forth, and combinations thereof. Nonlimiting representative flavor oils include spearmint oil, cinnamon oil, oil of wintergreen (methyl salicylate), peppermint oil, clove oil, bay oil, anise oil, eucalyptus oil, thyme oil, cedar leaf oil, oil of nutmeg, allspice, oil of sage, mace, oil of bitter almonds, and cassia oil. Also useful flavorings are artificial, natural and synthetic fruit flavors such as vanilla, and citrus oils including lemon, orange, lime, grapefruit, and fruit essences including apple, pear, peach, grape, strawberry, raspberry, cherry, plum, pineapple, apricot and so forth. These flavoring agents may be used in liquid or solid form and may be used individually or in admixture. Commonly used flavors include mints such as peppermint, menthol, artificial vanilla, cinnamon derivatives, and various fruit flavors, whether employed individually or in admixture.

Other useful flavorings include aldehydes and esters such as cinnamyl acetate, cinnamaldehyde, citral diethylacetal, dihydrocarvyl acetate, eugenyl formate, p-methylamisol, and so forth may be used. Generally any flavoring or food additive such as those described in Chemicals Used in Food Processing, publication 1274, pages 63-258, by the National Academy of Sciences, may be used.

Further examples of aldehyde flavorings include but are not limited to acetaldehyde (apple), benzaldehyde (cherry, almond), anisic aldehyde (licorice, anise), cinnamic aldehyde (cinnamon), citral, i.e., alpha-citral (lemon, lime), neral, i.e., beta-citral (lemon, lime), decanal (orange, lemon), ethyl vanillin (vanilla, cream), heliotrope, i.e., piperonal (vanilla, cream), vanillan (vanilla, cream), alpha-amyl cinnamaldehyde (spicy fruity flavors), butyraldehyde (butter, cheese), valeraldehyde (butter, cheese), citronellal (modifies, many types), decanal (citrus fruits), aldehyde C-8 (citrus fruits), aldehyde C-9 (citrus fruits), aldehyde C-12 (citrus fruits), 2-ethyl butyraldehyde (berry fruits), hexenal, i.e., trans-2 (berry fruits), tolyl aldehyde (cherry, almond), veratraldehyde (vanilla), 2,6-dimethyl-5-heptenal, i.e., melonal (melon), 2,6-dimethyloctanal (green fruit), and 2-dodecenal (citrus, mandarin), cherry, grape, strawberry shortcake, mixtures thereof and the like.

The flavoring agent may be employed in either liquid form and/or dried form. When employed in the latter form, suitable drying means such as spray drying the oil may be used. Alternatively, the flavoring agent may be absorbed onto water soluble materials, such as cellulose, starch, sugar, maltodextrin, gum arabic and so forth or may be encapsulated. The actual techniques for preparing such dried forms are well known and do not constitute a part of this invention.

The flavoring agents of the present invention may be used in many distinct physical forms well known in the art to provide an initial burst of flavor and/or a prolonged sensation of flavor. Without being limited thereto, such physical forms include free forms, such as spray dried, powdered, and beaded forms, and encapsulated forms, and mixtures thereof.

The amount of flavoring agent employed herein is normally a matter of preference subject to such

factors as the type of final ingestible compositions, the individual flavor, the gum base employed, and the strength of flavor desired. Thus, the amount of flavoring may be varied in order to obtain the result desired in the final product and such variations are within the capabilities of those skilled in the art without the need for undue experimentation. In gum composition applications, the flavoring agent is generally present in amounts from about 0.02% to about 5%, preferably from about 0.1% to about 2.5%, and more preferably from about 0.8% to about 2%, by weight of the gum composition.

The coloring agents useful in the present invention are used in amounts effective to produce the desired color. These coloring agents include pigments which may be incorporated in amounts up to about 6%, by weight of the gum composition. A preferred pigment, titanium dioxide, may be incorporated in amounts up to about 2%, and preferably less than about 1%, by weight of the composition. The colorants may also include natural food colors and dyes suitable for food, drug and cosmetic applications. These colorants are known as F.D.& C. dyes and lakes. The materials acceptable for the foregoing uses are preferably water-soluble. Illustrative nonlimiting examples include the indigoid dye known as F.D.& C. Blue No.2, which is the disodium salt of 5,5-indigotindisulfonic acid. Similarly, the dye known as F.D.& C. Green No.1 comprises a triphenylmethane dye and is the monosodium salt of 4-[4-(N-ethyl-p-sulfoniumbenzylamino) diphenylmethylene]-[1-(N-ethyl -N-p-sulfoniumbenzyl)-delta-2,5-cyclohexadieneimine]. A full recitation of all F.D.& C. colorants and their corresponding chemical structures may be found in the Kirk-Othmer Encyclopedia of Chemical Technology, 3rd Edition, in volume 5 at pages 857-884, which text is incorporated herein by reference.

Suitable oils and fats usable in gum compositions include partially hydrogenated vegetable or animal fats, such as coconut oil, palm kernel oil, beef tallow, lard, and the like. These ingredients when used are generally present in amounts up to about 7.0%, by weight, and preferably up to about 3.5%, by weight of the gum composition.

As set out above, the synergistic sweetening compositions of the present invention comprise L-alpha-aspartyl-D-alanine N-(2,2,4,4-tetramethyl-3-thietanyl)amide (Alitame) and N-L-alpha-aspartyl-L-phenylalanine 1-methyl ester (Aspartame). In a preferred embodiment, the synergistic sweetening compositions comprise L-alpha-aspartyl-D-alanine N-(2,2,4,4-tetramethyl-3-thietanyl)amide (Alitame) and N-L-alpha-aspartyl-L-phenylalanine 1-methyl ester (Aspartame) present in a ratio by weight of from about 40:60 to about 90:10, respectively. In a more preferred embodiment, the synergistic compositions comprise L-alpha-aspartyl-D-alanine N-(2,2,4,4-tetramethyl-3-thietanyl)amide and N-L-alpha-aspartyl-L-phenylalanine 1-methyl ester present in a ratio by weight of from about 50:50 to about 90:10, and most preferably in a ratio by weight of from about 58:42 to about 85:15, respectively.

In accordance with this invention, effective amounts of the synergistic sweetening composition of the present invention may be admixed into the chewing gum composition. The exact amount of synergistic sweetening composition employed is normally a matter of preference subject to such factors as the particular type of gum composition being prepared, the type of bulking agent or carrier employed, the type of flavor employed and the intensity of sweetness desired. Thus, the amount of synergistic sweetening composition may be varied in order to obtain the result desired in the final product and such variations are within the capabilities of those skilled in the art without the need for undue experimentation. In general, the amount of synergistic sweetening composition normally present in a chewing gum composition will be from about 0.005% to about 0.5%, preferably from about 0.05% to about 0.3%, and more preferably from about 0.15% to about 0.25%, by weight of the chewing gum composition.

The present invention extends to methods of making the improved sweetened chewing gum compositions. The gum compositions may be prepared using standard techniques and equipment known to those skilled in the art. The apparatus useful in accordance with the present invention comprises mixing and heating apparatus well known in the chewing gum manufacturing arts, and therefore the selection of the specific apparatus will be apparent to the artisan.

In such a method, a composition is made by admixing the inventive synergistic sweetening composition and the chewing gum base into the chewing gum composition along with the other ingredients of the final desired composition. Other ingredients will usually be incorporated into the composition as dictated by the nature of the desired composition as well known by those having ordinary skill in the art. The ultimate chewing gum compositions are readily prepared using methods generally known in the food technology and pharmaceutical arts. For example, a gum base is heated to a temperature sufficiently high to soften the base without adversely effecting the physical and chemical make up of the base. The optimal temperatures utilized may vary depending upon the composition of the gum base used, but such temperatures are readily determined by those skilled in the art without undue experimentation.

The gum base is conventionally melted at temperatures that range from about 60° C. to about 120° C. for a period of time sufficient to render the base molten. For example, the gum base may be heated under

these conditions for a period of about thirty minutes just prior to being admixed incrementally with the remaining ingredients of the base such as the plasticizer, the softener, the bulking agent, the synergistic sweetening agent, fillers, coloring agents and flavoring agents to plasticize the blend as well as to modulate the hardness, viscoelasticity and formability of the base. Mixing is continued until a uniform mixture of gum composition is obtained. Thereafter the gum composition mixture may be formed into desirable chewing gum shapes.

Another important aspect of the present invention includes a sweetened confectionery composition incorporating the inventive synergistic sweetening composition and a method for preparing the sweetened confectionery compositions. The preparation of confectionery formulations is historically well known and has changed little through the years. Confectionery items have been classified as either "hard" confectionery or "soft" confectionery. The synergistic sweetening compositions of the present invention can be incorporated by admixing the inventive composition into conventional hard and soft confections.

Hard confectionery may be processed and formulated by conventional means. In general, a hard confectionery has a base composed of a mixture of sugar and other carbohydrate bulking agents kept in an amorphous or glassy condition. This form is considered a solid syrup of sugars generally having from about 0.5% to about 1.5% moisture. Such materials normally contain up to about 92% corn syrup, up to about 55% sugar and from about 0.1% to about 5% water, by weight of the final composition. The syrup component is generally prepared from corn syrups high in fructose, but may include other materials. Further ingredients such as flavorings, sweeteners, acidulants, colorants and so forth may also be added.

Such confectionery may be routinely prepared by conventional methods such as those involving fire cookers, vacuum cookers, and scraped-surface cookers also referred to as high speed atmospheric cookers.

Fire cookers involve the traditional method of making a candy base. In this method, the desired quantity of carbohydrate bulking agent is dissolved in water by heating the agent in a kettle until the bulking agent dissolves. Additional bulking agent may then be added and cooking continued until a final temperature of 145° C. to 156° C. is achieved. The batch is then cooled and worked as a plastic-like mass to incorporate additives such as flavors, colorants and the like.

A high-speed atmospheric cooker uses a heat-exchanger surface which involves spreading a film of candy on a heat exchange surface, the candy is heated to 165° C. to 170° C. in a few minutes. The candy is then rapidly cooled to 100° C. to 120° C. and worked as a plastic-like mass enabling incorporation of the additives, such as flavors, colorants and the like.

In vacuum cookers, the carbohydrate bulking agent is boiled to 125° C. to 132° C., vacuum is applied and additional water is boiled off without extra heating. When cooking is complete, the mass is a semi-solid and has a plastic-like consistency. At this point, flavors, colorants, and other additives are admixed in the mass by routine mechanical mixing operations.

The optimum mixing required to uniformly mix the flavors, colorants and other additives during conventional manufacturing of hard confectionery is determined by the time needed to obtain a uniform distribution of the materials. Normally, mixing times of from 4 to 10 minutes have been found to be acceptable.

Once the candy mass has been properly tempered, it may be cut into workable portions or formed into desired shapes. A variety of forming techniques may be utilized depending upon the shape and size of the final product desired. A general discussion of the composition and preparation of hard confections may be found in H.A. Lieberman, Pharmaceutical Dosage Forms: Tablets, Volume 1 (1980), Marcel Dekker, Inc., New York, N.Y. at pages 339 to 469, which disclosure is incorporated herein by reference.

The apparatus useful in accordance with the present invention comprises cooking and mixing apparatus well known in the confectionery manufacturing arts, and therefore the selection of the specific apparatus will be apparent to the artisan.

In contrast, compressed tablet confections contain particular materials and are formed into structures under pressure. These confections generally contain sugars in amounts up to about 95%, by weight of the composition, and typical tablet excipients such as binders and lubricants as well as flavors, colorants and so forth.

Similar to hard confectionery, soft confectionery may be utilized in this invention. The preparation of soft confections, such as nougat, involves conventional methods, such as the combination of two primary components, namely (1) a high boiling syrup such as a corn syrup, hydrogenated starch hydrolysate or the like, and (2) a relatively light textured frappe, generally prepared from egg albumin, gelatin, vegetable proteins, such as soy derived compounds, sugarless milk derived compounds such as milk proteins, and mixtures thereof. The frappe is generally relatively light, and may, for example, range in density from about 0.5 to about 0.7 grams/cc.

The high boiling syrup, or "bob syrup" of the soft confectionery is relatively viscous and has a higher density than the frappe component, and frequently contains a substantial amount of carbohydrate bulking agent such as a hydrogenated starch hydrolysate. Conventionally, the final nougat composition is prepared by the addition of the "bob syrup" to the frappe under agitation, to form the basic nougat mixture. Further ingredients such as flavoring, additional carbohydrate bulking agent, colorants, preservatives, medicaments, mixtures thereof and the like may be added thereafter also under agitation. A general discussion of the composition and preparation of nougat confections may be found in B.W. Minifie, Chocolate, Cocoa and Confectionery: Science and Technology, 2nd edition, AVI Publishing Co., Inc., Westport, Conn. (1980), at pages 424-425, which disclosure is incorporated herein by reference.

The procedure for preparing the soft confectionery involves known procedures. In general, the frappe component is prepared first and thereafter the syrup component is slowly added under agitation at a temperature of at least about 65° C., and preferably at least about 100° C. The mixture of components is continued to be mixed to form a uniform mixture, after which the mixture is cooled to a temperature below 80° C., at which point, the flavor may be added. The mixture is further mixed for an additional period until it is ready to be removed and formed into suitable confectionery shapes.

As set out above, the synergistic sweetening compositions of the present invention comprise L-alpha-aspartyl-D-alanine N-(2,2,4,4-tetramethyl-3-thietanyl)amide (Alitame) and N-L-alpha-aspartyl-L-phenylalanine 1-methyl ester (Aspartame). In a preferred embodiment, the synergistic sweetening compositions comprise L-alpha-aspartyl-D-alanine N-(2,2,4,4-tetramethyl-3-thietanyl)amide (Alitame) and N-L-alpha-aspartyl-L-phenylalanine 1-methyl ester (Aspartame) present in a ratio by weight of from about 40:60 to about 90:10, respectively. In a more preferred embodiment, the synergistic compositions comprise L-alpha-aspartyl-D-alanine N-(2,2,4,4-tetramethyl-3-thietanyl)amide and N-L-alpha-aspartyl-L-phenylalanine 1-methyl ester present in a ratio by weight of from about 50:50 to about 90:10, and most preferably in a ratio by weight of from about 58:42 to about 85:15, respectively.

In accordance with this invention, effective amounts of the synergistic sweetening compositions of the present invention may be admixed into the hard and soft confections. The exact amount of synergistic sweetening composition may be varied in order to obtain the result desired in the final product and such variations are within the capabilities of those skilled in the art without the need for undue experimentation. The exact amount of synergistic sweetening composition employed is normally a matter of preference subject to such factors as the particular type of confection being prepared, the type of bulking agent or carrier employed, the type of flavor employed and the intensity of sweetness desired. Thus, the amount of synergistic sweetening composition may be varied in order to obtain the result desired in the final product and such variations are within the capabilities of those skilled in the art without the need for undue experimentation. In general, the amount of synergistic sweetening composition normally present in a hard or soft confection will be from about 0.005% to about 0.5%, preferably from about 0.01% to about 0.2%, and more preferably from about 0.04% to about 0.15%, by weight of the confection.

The present invention extends to methods of making the improved sweetened confections. The synergistic sweetening compositions may be incorporated into an otherwise conventional hard or soft confection composition using standard techniques and equipment known to those skilled in the art. The apparatus useful in accordance with the present invention comprises mixing and heating apparatus well known in the confectionery manufacturing arts, and therefore the selection of the specific apparatus will be apparent to the artisan.

In such a method, a composition is made by admixing the inventive synergistic sweetening composition and the confectionery bulking agent into the confectionery composition along with the other ingredients of the final desired composition. Other ingredients will usually be incorporated into the composition as dictated by the nature of the desired composition as well known by those having ordinary skill in the art. The ultimate confectionery compositions are readily prepared using methods generally known in the food technology and pharmaceutical arts. Thereafter the confectionery mixture may be formed into desirable confectionery shapes.

The synergistic sweetening compositions may be formulated with conventional ingredients which offer a variety of textures to suit particular applications. Such ingredients may be in the form of hard and soft confections, tablets, toffee, nougat, chewy candy, chewing gum and so forth, both sugar and sugarless. The acceptable ingredients may be selected from a wide range of materials. Without being limited thereto, such materials include diluents, binders and adhesives, lubricants, disintegrants, bulking agents, humectants and buffers and adsorbents. The preparation of such confections and chewing gum products is well known.

The present invention is further illustrated by the following examples which are not intended to limit the effective scope of the claims. All parts and percentages in the examples and throughout the specification and claims are by weight of the final composition unless otherwise specified.

EXAMPLES 1-10

These examples demonstrate the synergistic sweetness effect of the combination of L-alpha-aspartyl-D-alanine N-(2,2,4,4-tetramethyl-3-thietanyl)amide (Alitame) and N-L-alpha-aspartyl-L-phenylalanine 1-methyl ester (Aspartame) in chewing gum compositions.

Alitame and Aspartame in dry powder form were combined to formulate test chewing gum compositions, prepared by conventional chewing gum manufacturing techniques, with the ratios set out in Table 1.

TABLE 1

| SYNERGISTIC SWEETENING AGENT COMBINATIONS IN CHEWING GUM COMPOSITIONS | | | | | | | | | | |
|---|---|---|---|---|---|---|---|---|---|---|
| Ingredient | EXAMPLES (Percent by Weight) | | | | | | | | | |
| | 1 | 2 | 3 | 4 | 5 | 6 | 7 | 8 | 9 | 10 |
| Gum base | 23.0 | 23.0 | 23.0 | 23.0 | 23.0 | 23.0 | 23.0 | 23.0 | 23.0 | 23.0 |
| Bulking Agent | 60.13 | 60.105 | 60.0725 | 60.04975 | 60.02375 | 59.9945 | 59.9685 | 59.9425 | 59.86125 | 59.78 |
| Softening Agent | 15.5 | 15.5 | 15.5 | 15.5 | 15.5 | 15.5 | 15.5 | 15.5 | 15.5 | 15.5 |
| Coloring Agent | 0.17 | 0.17 | 0.17 | 0.17 | 0.17 | 0.17 | 0.17 | 0.17 | 0.17 | 0.17 |
| Flavoring Agent | 1.2 | 1.2 | 1.2 | 1.2 | 1.2 | 1.2 | 1.2 | 1.2 | 1.2 | 1.2 |
| Alitame | --- | 0.025 | 0.0225 | 0.02075 | 0.01875 | 0.0165 | 0.0145 | 0.0125 | 0.00625 | --- |
| Aspartame | --- | ----- | 0.035 | 0.0595 | 0.0875 | 0.1190 | 0.147 | 0.175 | 0.2625 | 0.35 |
| Alitame:Aspartame | -- | 100:0 | 90:10 | 83:17 | 75:25 | 66:34 | 58:42 | 50:50 | 25:75 | 0:100 |

On a relative scale of sucrose = 1, Alitame = 2000X and Aspartame = 180X (in solution and about 140X in chewing gums), the above set forth percentages of sweetening agents in the chewing gum compositions in examples 2-10 should produce equivalent sweetening intensities. Varying the amounts of Alitame and Aspartame by percentages related to the above defined end points should produce, in examples 2 through 10, equivalent sweetening intensities. This was found not to be the case.

An expert sensory chew panel having experience in the organoleptic evaluation of ingestible products, including chewing gums, evaluated the relative sweetening intensity of the chewing gum compositions of examples 1-10, inclusive, at 30 seconds, 2 minutes, 6 minutes and 10 minutes. The findings are graphically depicted in Figure 1, where sweetness intensity is plotted versus the ratio of Alitame:Aspartame. The straight lines through each graph illustrate the expected sweetening intensity.

Figure 1 shows that the chewing gum composition of example 9 had equivalent sweetening intensity meaning that little or no synergy of sweetening effect exists between Alitame and Aspartame at the ratio of 25:75, respectively. The chewing gum compositions of examples 3-8 showed varying degrees of enhanced sweetening intensity meaning a synergy of effect between Alitame and Aspartame exists at the ratio of from about 40:60 to about 90:10, respectively. Greater synergy between Alitame and Aspartame was shown at the ratio of from about 50:50 to about 90:10, and the greatest synergy of effect between Alitame and Aspartame was observed at the ratio of from about 58:42 to about 83:17, respectively.

## EXAMPLES 11-13

These examples further demonstrate the synergistic sweetness effect of the combination of L-alpha-aspartyl-D-alanine N-(2,2,4,4-tetramethyl-3-thietanyl)amide (Alitame) and N-L-alpha-aspartyl-L-phenylalanine 1-methyl ester (Aspartame) in chewing gum compositions.

The amount of sweetening agent in the chewing gum composition of example 4, wherein the ratio of Alitame to Aspartame present was 80:20, respectively, was reduced to 15%, 30% and 50% of the amount of sweetening agent contained in the chewing gum composition of example 4. The formulations of the chewing gum compositions of examples 11-13 are set out in Table 2.

TABLE 2

| SYNERGISTIC SWEETENING AGENT COMBINATIONS IN CHEWING GUM COMPOSITIONS | | | |
|---|---|---|---|
| Ingredient | EXAMPLES (Percent by Weight) | | |
| | 11 | 12 | 13 |
| Gum base | 23.0 | 23.0 | 23.0 |
| Bulking agent | 59.9034 | 59.9433 | 60.0898 |
| Softener | 15.5 | 15.5 | 15.5 |
| Coloring | 0.17 | 0.17 | 0.17 |
| Flavoring | 1.2 | 1.2 | 1.2 |
| Alitame | 0.176 | 0.145 | 0.0104 |
| Aspartame | 0.0506 | 0.0417 | 0.0298 |
| Alitame:Aspartame | 80:20 | 80:20 | 80:20 |
| Sweetener Reduction | 15% | 30% | 50% |

An expert sensory chew panel evaluated the relative sweetening intensity of the chewing gum compositions of examples 11-13, inclusive, at 30 seconds, 2 minutes, 6 minutes and 10 minutes. The findings are depicted in a bar graph in Figure 2, where sweetness intensity is plotted versus % the reduction in sweetening composition concentration at various time periods.

Figure 2 shows that the actual sweetness intensity of the chewing gum composition of example 12, which had a reduction in sweetening composition concentration of 30%, approached the expected sweetness intensity for that ratio of Alitame:Aspartame. The actual sweetness intensity of the chewing gum

composition of example 13, which had a reduction in sweetening composition concentration of 50%, fell below the expected sweetness intensity for that ratio of Alitame:Aspartame. Figure 2 also shows that after about 30 seconds, the level of sweetener synergy was about 35%. After about 2 minutes, the level of sweetener synergy was about 45%. After about 6 minutes, the sweetening composition appeared to be chewed out. Hence the synergy of sweetening effect existing between Alitame and Aspartame at the ratio of 80:20, respectively, is from about 35% to about 45%.

## EXAMPLES 14-17

These examples demonstrate the synergistic sweetness intensity of L-alpha-aspartyl-D-alanine N-(2,2,4,4-tetramethyl-3-thietanyl)amide (Alitame) and N-L-alpha-aspartyl-L-phenylalanine 1-methyl ester (Aspartame) in solution.

Initial stock solutions of Alitame and Aspartame were prepared. Alitame was prepared in a 0.1% solution and Aspartame was prepared in a 1.0% solution. These stock solutions were then combined to formulate test solutions in accordance with the ratios of synergy found in examples 1-10 above. The solutions had the following ratios:

| Solution | % Alitame | % Aspartame | Alitame:Aspartame |
|---|---|---|---|
| 14 | 0.10 | ---- | 100:0 |
| 15 | 0.08 | 0.20 | 80:20 |
| 16 | 0.05 | 0.50 | 50:50 |
| 17 | ---- | 1.0 | 0:100 |

On a relative scale of sucrose = 1, Alitame = 2000X and Aspartame 180X , the above set forth percentages of sweetening agents in the solutions in examples 14-17 should produce equivalent sweetening intensities. Varying the amounts of Alitame and Aspartame by percentages related to the above defined end points should produce, in examples 14 through 17, equivalent sweetening intensities. This was found not to be the case.

An expert taste panel evaluated the solutions of examples 14-17 and the findings are depicted in the bar graph of Figure 3, where sweetening intensity is plotted versus the ratio of Alitame:Aspartame.

Figure 3 shows that the solutions of examples 15 and 16 showed varying degrees of enhanced sweetening intensity meaning a synergy of sweetness effect exists between Alitame and Aspartame at the ratio of from about 80:20 to about 50:50, respectively.

The invention being thus described, it will be obvious that the same may be varied in many ways. Such variations are not to be regarded as a departure from the spirit and scope of the invention and all such modifications are intended to be included within the scope of the following claims.

**Claims**

1. A sweetening composition which comprises L-alpha-aspartyl-D-alanine N-(2,2,4,4-tetramethyl-3-thietanyl)amide and N-L-alpha-aspartyl-L-phenylalanine 1-methyl ester.

2. A sweetening composition according to claim 1, wherein L-alpha-aspartyl-D-alanine N-(2,2,4,4-tetramethyl-3-thietanyl)amide and N-L-alpha-aspartyl-L-phenylalanine 1-methyl ester are present in a ratio by weight in the range from 40:60 to 90:10, respectively.

3. A sweetening composition according to claim 2, wherein L-alpha-aspartyl-D-alanine N-(2,2,4,4-tetramethyl-3-thietanyl)amide and N-L-alpha-aspartyl-L-phenylalanine 1-methyl ester are present in a ratio by weight in the range from 50:50 to 90:10, respectively.

4. A sweetening composition according to claim 3, wherein L-alpha-aspartyl-D-alanine N-(2,2,4,4-tetramethyl-3-thietanyl)amide and N-L-alpha-aspartyl-L-phenylalanine 1-methyl ester are present in a ratio by weight in the range from 58:42 to 85:15, respectively.

5. An edible composition which includes an effective amount of a sweetening composition according to any one of claims 1 to 4.

6. An edible composition according to claim 5, wherein the sweetening composition is present in an

amount in the range from 0.005% to 0.5%, preferably from 0.05% to 0.3%, by weight of the edible composition.

7. A sweetened chewing gum composition which comprises a chewing gum base and an effective amount of a sweetening composition according to any one of claims 1 to 4.

8. A sweetened chewing gum composition according to claim 7, wherein the sweetening composition is present in an amount in the range from 0.005% to 0.5%, preferably from 0.05% to 0.3%, by weight of the chewing gum composition.

9. A sweetened confectionery composition which comprises a confectionery base and an effective amount of a sweetening composition according to any one of claims 1 to 4.

10. A sweetened confectionery composition according to claim 9, wherein the sweetening composition is present in an amount in the range from 0.005% to 0.5%, preferably from 0.01% to 0.2%, by weight of the confectionery composition.

Claims for the following Contracting State: ES

1. A process for preparing a sweetening composition, which comprises admixing L-alpha-aspartyl-D-alanine N-(2,2,4,4-tetramethyl-3-thietanyl)amide and N-L-alpha-aspartyl-L-phenylalanine 1-methyl ester.

2. A process according to claim 1, wherein L-alpha-aspartyl-D-alanine N-(2,2,4,4-tetramethyl-3-thietanyl)amide and N-L-alpha-aspartyl-L-phenylalanine 1-methyl ester are present in a ratio by weight in the range from 40:60 to 90:10, respectively.

3. A process according to claim 2, wherein L-alpha-aspartyl-D-alanine N-(2,2,4,4-tetramethyl-3-thietanyl)amide and N-L-alpha-aspartyl-L-phenylalanine 1-methyl ester are present in a ratio by weight in the range from 50:50 to 90:10, respectively.

4. A process according to claim 3, wherein L-alpha-aspartyl-D-alanine N-(2,2,4,4-tetramethyl-3-thietanyl)amide and N-L-alpha-aspartyl-L-phenylalanine 1-methyl ester are present in a ratio by weight in the range from 58:42 to 85:15, respectively.

5. A process for preparing a sweetened edible composition which comprises admixing a pharmaceutically acceptable carrier with an effective amount of a sweetening composition produced by a process according to any one of claims 1 to 4.

6. A process according to claim 5, wherein the sweetening composition is present in an amount in the range from 0.005% to 0.5%, by weight of the edible composition.

7. A process for preparing a sweetened chewing gum composition, which comprises admixing a chewing gum base with an effective amount of a sweetening composition produced by a process according to any one of claims 1 to 4.

8. A process according to claim 7, wherein the sweetening composition is present in an amount in the range from 0.005% to 0.5%, by weight of the chewing gum composition.

9. A process for preparing a sweetened confectionery composition, which comprises admixing a confectionery bulking agent with an effective amount of a sweetening composition produced by a process according to any one of claims 1 to 4.

10. A process according to claim 9, wherein the sweetening composition is present in an amount in the range from 0.005% to 0.5%, by weight of the confectionery composition.

FIG-1

ALITAME SYNERGY
ASPARTAME

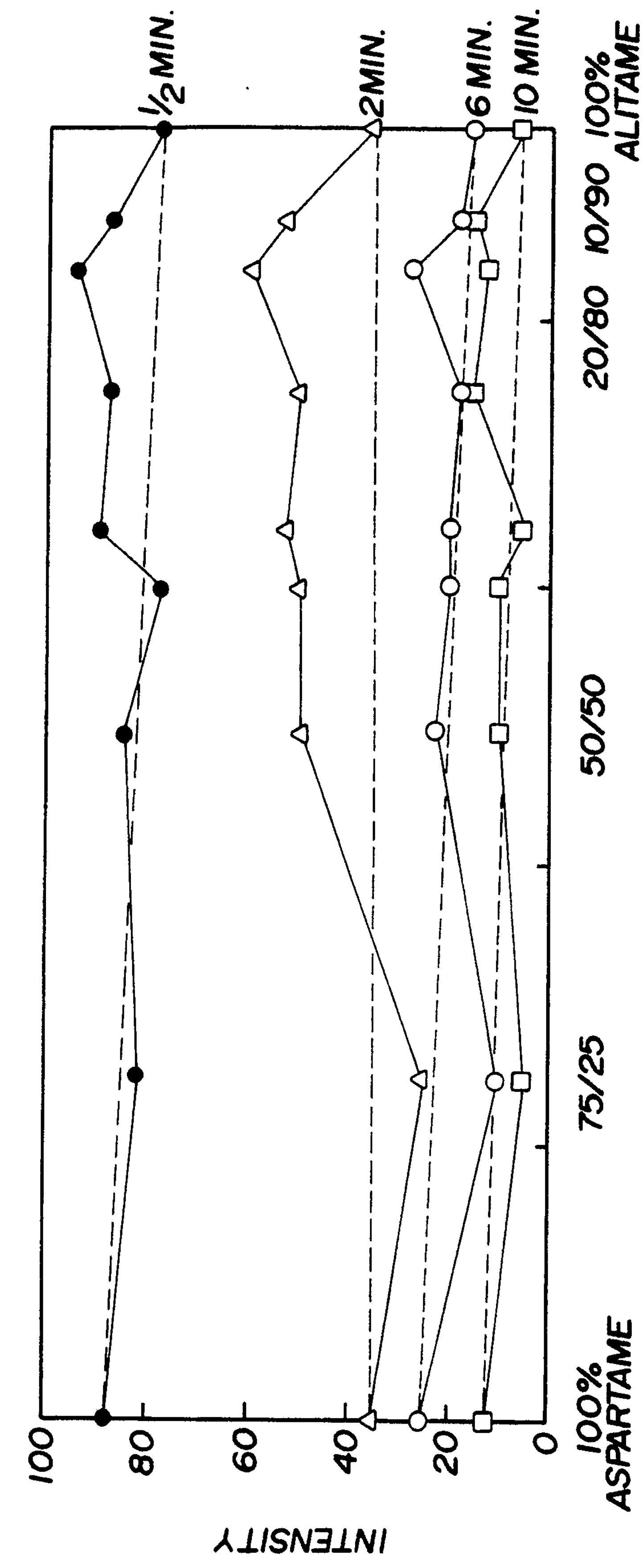

FIG-2 ALITAME / ASPARTAME SYNERGY PERCEIVED SWEETNESS INTENSITY

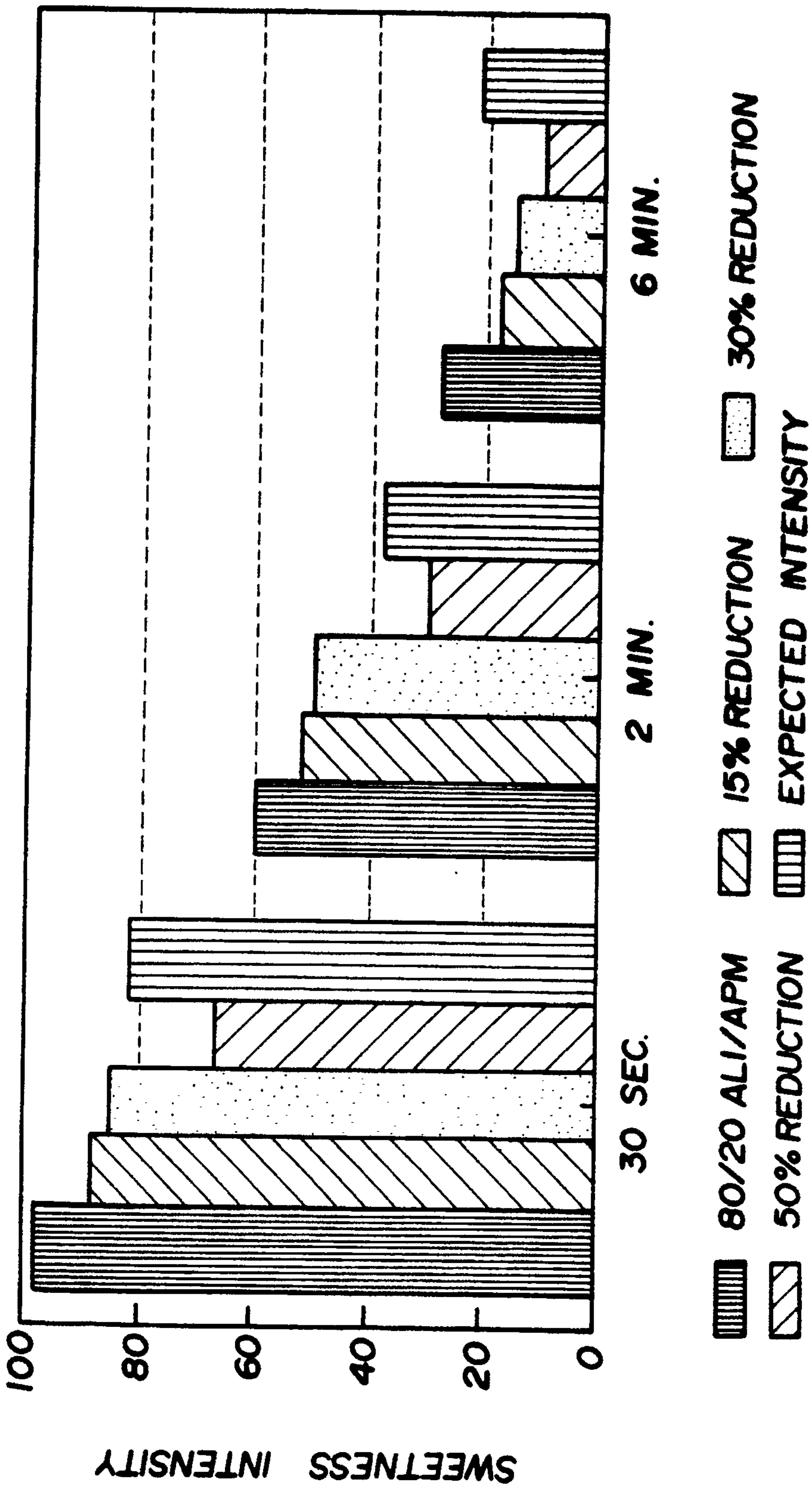

FIG-3

ALITAME / ASPARTAME SYNERGY
PERCEIVED SWEETNESS INTENSITY